# EUROPEAN PATENT SPECIFICATION

(11) **EP 1 573 298 B1**
(45) Date of publication and mention of the grant of the patent: **08.08.2012**
(21) Application number: 03779764.4
(22) Date of filing: 19.12.2003
(51) Int. Cl.: G01N 1/31, G01N 35/10

(54) **AN AUTOMATED SAMPLE PROCESSING APPARATUS AND A METHOD OF AUTOMATED TREATING OF SAMPLES AND USE OF SUCH APPARATUS**
AUTOMATISCHE PROBENVERARBEITUNGSVORRICHTUNG UND AUTOMATISCHES VERFAHREN ZUR BEHANDLUNG VON PROBEN UND VERWENDUNG SOLCH EINER VORRICHTUNG
APPAREIL ET PROCEDE DE TRAITEMENT AUTOMATISE D'ECHANTILLONS ET UTILISATION DE CET APPAREIL

(30) Priority: 20.12.2002 US 435601 P; 14.05.2003 EP 03076463
(43) Date of publication of application: 14.09.2005
(73) Proprietor: Dako Denmark A/S, 2600 Glostrup (DK)
(72) Inventor: LATHROP, Robert, San Jose, CA 95124 (US); KEY, Marc, Ojai, CA 93023 (US); FAVUZZI, John, Santa Barbara, CA 93111 (US)
(86) International application number: PCT/DK2003/000911
(87) International publication number: WO 2004/057308

(56) References cited:
- US-A- 5 425 918
- US-A- 5 723 092
- US-A- 5 839 091
- US-A- 5 948 359
- US-B1- 6 352 861

## Description

### FIELD OF INVENTION

This application relates to the field of sample processing systems and methods of processing samples. The present invention may be directed to the automated processing, treatment, or even staining of samples arranged on carriers, such as slides, and in some embodiments, directed to the continuous or batch processing of samples and carriers, as well as washing elements of a sampling system. Embodiments may further relate to control systems for sample processing and data acquisition, data maintenance, and data retrieval for sample processing. Applications to which the present invention may especially relate include immunohistochemistry, in-situ hybridization, fluorescent in-situ hybridization, special staining, and cytology, as well as potentially other chemical and biological applications.

More specifically the present invention relates to an automated sample processing apparatus for treating samples arranged on carrier means, such as microscope slides or sample tubes, located at defined positions close to or in the apparatus by aspirating a portion of selected reagent from a station containing a plurality of reagents and thereafter dispense the reagent to a sample, e.g. a tissue, organic cells, bacteria etc., arranged on the carrier means. The invention facilitates that two or more reagents are mixed and the mixture applied to a sample.

The invention also relates to a method of automated treating of samples by mixing reagents and dispensing the mixture to the sample.

A sample is in this application to be understood as a biological sample such as histological samples, e.g. tissue and cell specimens, including cell lines, proteins and synthetic peptides, tissues, cell preparations, blood, bodily fluids, bone marrow, cytology specimens, blood smears, thin-layer preparations, and micro arrays, and specifically biological samples on microscope slides.

### BACKGROUND OF INVENTION

Sample processing in immunohistochemical (IHC) applications and in other chemical and biological analyses may require one or a number of various processing sequences or protocols as part of an analysis of one or more samples. The sample processing sequences or protocols may be defined by the individual or organization requesting an analysis, such as a pathologist or histologist of a hospital, and may be further defined by the dictates of a particular analysis to be performed.

In preparation for sample analysis, a biological sample may be acquired by known sample acquisition techniques and may comprise, for example in IHC applications, tissues generally or even in some applications one or a plurality of isolated cells, such as in microarray samples, and may be presented on a sample carrier such as a microscope slide. Furthermore, the sample may be presented on the carrier variously and potentially in some form of preservation. As one example, a sample such as a layer or slice of skin may be preserved in formaldehyde and presented on a carrier with one or more paraffin or other chemical layers infiltrating the sample.

Immunologic and histological applications, for example, may require processing sequences or protocols that comprise steps such as deparaffinization, target retrieval, and staining, especially for in-situ hybridization (ISH) techniques. Previously, in some applications, these steps may have been performed manually, potentially creating a time-intensive protocol and necessitating personnel to be actively involved in the sample processing. Attempts have been made to automate sample processing to address the need for expedient sample processing and a less manually burdensome operation. However, such previous efforts may have not fully addressed the needs for an automated sample processing system. Previous efforts to automate sample processing may be deficient in several aspects that prevent more robust automated sample processing, such as: the lack of sufficient computer control and monitoring of sample processing; the lack of information sharing for processing protocol and processing status, especially for individual samples; the lack of diagnostic capabilities; and the lack of real-time or adaptive capabilities for multiple sample batch processing.

Past efforts at automated sample processing for samples presented on carriers such as slides, such as US Patent No. 6352861 to Ventana Medical Systems, Inc. and US Patent No. 5839091 to LabVision Corporation, have not afforded the various advantages and other

Sample processing apparatuses for staining and treating samples by means of probes normally comprises a first station for containing one or more reagent vials; a second station for mounting slides, a probe arranged to aspirate a portion of reagent from a selected reagent vial and dispensing the reagent to a slide on which the sample is arranged and a drive means for moving the probe between the various stations.

US-A-5,948,359 discloses an apparatus of the above mentioned type, wherein the first station comprises a vial holder for holding 40 or more vials in order to provide a wide range of different reagents adapted for different staining purposes, and thereby the possibility of automatically staining a large number of slides requiring different staining processes. In practise it is very important that the apparatus facilitates that many different staining processes can be performed at the same time in the apparatus, because this avoids the necessity of batching samples requiring the same procedure or other treatment with reagents, and processing each batch individually.

US-A-5,723,092 discloses a sample dilution well for an immunoassay analyser in which a sample and a diluent is mixed by rotating the sample dilution well. Samples such as plasma or urine are loaded into the immunoassay analyser in a number of sample containing tubes, and a probe is arranged for collecting a portion of the sample in a selected sample carrying tube and transferring the sample to the dilution well, adding a portion of diluent, such as water to the sample portion and mixing the two by rotating the dilution well, after which a portion of the diluted sample is aspirated from the dilution well for examination.

The mixing of reagents is known from US-A-5,425,918 disclosing a staining apparatus for treating samples arranged on carrier means, comprising a vial station for containing at least two reagent vials, a carrier means station arranged for intermediate storage of a plurality of carrier means, probe drive means arranged for moving a probe, wherein the probe drive means is arranged to aspirate a portion of reagent from a selected reagent vial of the vial station by means of a probe and to apply reagent to a selected carrier means of the carrier means station. In this document it is suggested how to solved the problem regarding agents requiring mixing just prior to use due to short active lifetimes after mixing. The agents may be mixed by use of the probe and probe drive means drawing up one agent from its storage vial and dispensing it into the storage vial of the second agent. The mixed solution is then drawn up and dispensed onto the slides.

Mixing wells for mixing samples and diluents are also disclosed by US-A-4,323,537, in which an analysis system is described having mixing cuvettes for mixing sample and diluents by rotation and a displaceable probe for collecting the raw sample from a sample container and deliver it to the mixing cuvette, and for collecting the diluted sample from the cuvette after mixing and deliver it to a plurality of analysis stations for further, automated analysis.

Methods for mixing reagents and liquids are well known - but several aspects are important in the context of IHC and ISH instruments wherein the mixing in some processes can be cumbersome.

The staining procedure is laborious and uses many different reagents. The staining protocol may include the following steps: deparaffination, washing, antigen retrieval, endogenous biotin or enzyme blocking, incubation with immunological reagents, molecular probes, secondary visualization reagents and various chromogen reagents, washing steps and counterstaining.

An on-board mixing device should be able to mix a multiple of reagents and mixtures. Non-limiting examples include:
Dilution of chromogens concentrates, mixing and dilution of two, three or four component enzyme chromogen reagents, dilution of buffer concentrates, dilution of immunological reagents with dilution buffer, dilution of visualization reagents with dilution buffers, mixing several visualization reagents with dilution buffer or dilution of enzyme blocking reagents, dilution of biotin blocking reagents or mixing and dilution of counterstaining reagents.

During the mixing several problems may arise. Some problems arise due to the complex use of reagents in the staining procedure. Below a few non-limiting examples are listed in more detail:
The chromogen reagents (e.g. DAB, AEC, fast red etc) often comes as concentrated reagents in organic or high viscosity solutions and needs to be diluted prior to being applied to the sample.

Chromogens like the Fast Red alkaline phosphatase chromogen are made ready for use by mixing and dilution of two or three reagents, which are very different in nature with regard to salt content, viscosity and density. Furthermore, the resulting mixtures are unstable over time and need to be used within a short time.

Some chromogens suitable for e.g. horseradish peroxidase, like DAB and AEC, are easily oxidized when exposed to air during e.g. vigorous mixing or dilution.

The enzyme chromogens and counterstain reagents like e.g. hematoxylin, are semi oxidized and can contain precipitates and solids. By further oxidation or slight change in pH, the reagents can further precipitate.

Antibody and enzyme containing reagents often contain stabilizing proteins and or detergents, which causes the solution to foam when being shaken or stirred. Many proteins cannot easily tolerate to be exposed to the hydrophobic air in foam.

Wash buffers can contain detergents, which can foam when shaken or stirred. The foam can spread to other compartments of the instrument in an unwanted and unpredictable way.

Mixing of some reagents like e.g. the HRP chromogens and peroxide reagents can result in the formation of small bobbles. These can generate foam or bubbling on the surface of the mixture.

Spill over/carry over must be avoided. The staining process is characterized by using many, complex and very different reagents and buffers and in many different dilution ratios and mixtures. Some of the reagents or buffers are incompatible with each other's. In the event of cross contamination due to e.g. carry over, the reagents may be ruined within seconds or solids can precipitate, making the staining unsuccessful. For example, enzyme containing reagents can not be mixed with the corresponding chromogens, or high salt concentrates may not be mixed with e.g. proteins containing mixtures, or organic solvents can not be mixed with protein containing mixtures, or highly pH buffered wash buffers can not be mixed with low buffered mixtures without significantly altering the properties of the reagents. Accordingly the cleansing and washing of the mixing device need to be very efficient.

As the procedures are very complex, and the instrument uses many different protocols, one cannot predict the result of reagent carry-over or unplanned mixing of reagents. Consequently, the mixing device should ideally be very efficient and be designed for a variety of reagent mixing protocols and sequences.

Build-up of small fouling layers on the surfaces will fast cause problems, as the typical staining protocol calls for many mixing and dilution steps. Consequently, the mixing device should have a minimum of surface area and very smooth surfaces.

Furthermore, the mixing device should ideally be able to mix very different volumes of reagents in both small and large volumes ratios. In other words, the degree of dilution and mixing ratios of reagents may vary from small to high ratios.

In summary, the mixing device should ideally allow:
- Mixing of small and large volumes
- Mixing reagents with different viscosities and densities
- Mixing of immiscible or nearly immiscible reagents
- No fouling of mixing rods or similar due to precipitated material
- Allow easy escape of formed gasses during mixing
- Prevent foaming of e.g. detergent or protein containing reagents
- Low build-up of debris or fouling on the device surfaces
- Easy emptying and washing - regardless of volumes
- Very low reagent carry-over

No present mixing system truly fulfils the above-mentioned properties. On the slide mixing does not allow for very large ratios of dilution. Nor does it allow for efficient mixing of reagents with very different densities or viscosity.

The object of the present invention is to improve the known apparatuses for sample processing as well as the method for automatic sample processing by facilitating a wider range of available processes of treatment, so as to increase the number of different staining and/or treatment processes that may be performed automatically, alternatively or additionally to provide an increased quality of some specific staining processes.

### SUMMARY OF INVENTION

This is achieved by the automated sample processing apparatus according to the present invention, comprising a reagent mixer having
a mixing cup for receiving two or more reagents and mixing means for mixing the reagents in the mixing cup, and
means for dispensing the reagent mixture from the mixing cup to a selected carrier means.

An apparatus according to the invention may comprise an automated sample processing system comprising a plurality of drawers, a plurality of sample carrier retainment assemblies each removably configured with one of the drawers, and an adaptive sample processing control system to which the drawers and the sample carrier retainment assemblies are responsive. The sample carrier retainment assemblies may comprise slide retainment assembly and may be removably configured with the drawers to provide sample processing with the drawers of the system. The adaptive sample processing control system may automate the sample processing system such that one or more batches of samples may be processed according to one or more protocols, potentially indicated by information on the slides that may be automatically identified by the adaptive sample processing control system. Sample processing may comprise one or more sampling protocols and steps, such as deparaffinization, target retrieval, and staining.

The term staining is used for the end product of the process, by which certain parts of the sample may be stained, i.e. have obtain a different colour, either in the optic range or in another electromagnetic range, such as ultra violet, or the staining may be an detectable, preferably automatically detectable, change in properties, such as fluorescent properties, magnetic properties, electrical properties or radioactive properties. To obtain the staining, the sample normally have to undergo a series of treatment steps, such as - but not limited to - washing, binding of reagents to the specific parts of the sample, activation of the reagents, etc. and each treatment step may include a plurality of individual treatments.

In some staining processes, it is required for one or more treatments to use a mixture of reagents prepared from two or more separate reagents which may be somewhat incompatible e.g. unmixable, such as a water based and an oil based reagent, or insoluble, and therefore requires that the two or more reagents are manually prepared and introduced into a reagent vial shortly before starting the staining process in order to obtain the best possible staining result for the selected examination purposes. For other processes, different staining process steps require a mixture of the same two reagents but in different dissolution ratios. Some process step may require a mixture of two or more reagents that, when mixed, becomes unstable, e.g. has a limited time window of usability because internal chemical processes deteriorates the mixture. By providing a sample processing apparatus having an automated mixer integrated therein, these types of staining processes can be performed automatically instead of requiring human interaction or manual performance of some process steps, thereby achieving a much more automated process, and the quality of the staining process may be improved as a desired degree of mixing of reagents may be provided as well as an optimal application time window for a deteriorating mixture may be reached.

Thus, the present invention relates to an automated sample processing apparatus for treating samples arranged on carrier means, comprising
a vial station for containing at least two reagent vials,
a carrier means station arranged for intermediate storage of a plurality of carrier means,
probe drive means arranged for moving a probe,
wherein the probe drive means is arranged to aspirate a portion of reagent from a selected reagent vial of the vial station by means of a probe and to apply reagent to a selected carrier means of the carrier means station,
wherein the apparatus comprises an integrated reagent mixer having
a mixing cup for receiving two or more reagents and mixing means for mixing the reagents in the mixing cup, and
means for dispensing the reagent mixture from the mixing cup to a selected carrier means of the carrier means station and, wherein the reagent mixer further comprises cup drive means arranged for cyclic movement of the mixing cup so as to mix reagents contained in the mixing cup, and wherein the movement of the mixing cup is a combination of rotations with variable speed, various speeds, stops and change direction, wherein the rotation pattern (speed and direction) is controlled by controlling means, such as a computer, according to the sample processing protocol for the sample(s) processed in the apparatus.

The vial station is a collection of a plurality of vials, at least two, but often 20-60 vials or more, which may or may not be physically arranged in close proximity to each other. The term station does not indicate that the vials must be located within one, confined area; rather it indicates the existence of a plurality of vials. The probe drive means may be a robot arm with two or three degrees of freedom, such as an articulated arm or one track or a set of perpendicular tracks along which a probe retainer of the probe drive means may be displaced, wherein the probe retainer may be moved in a direction normal to the track or tracks. The skilled person may readily design other types of probe drive means, e.g. combinations of the above described. The carrier means may be provided to the apparatus in a two-dimensional array, e.g. constituted by individual rows of carrier means as discussed in the example below, or the carrier means may be provided in any manner known in the art, e.g. arranged in a carrousel or as a row of carrier means. The carrier means may also be arranged movably with respect to the probe drive means, such as in an endless row that is advanced automatically past the operating area of the probe drive means or as a two-dimensional array that may be moved in a direction perpendicular to a travel direction of the probe drive means, so that the probe may reach any carrier means by the combined movement of the probe and the array.

The carrier means are preferably arranged in groups or series on trays or the like, so that a plurality of carrier means may be removed from or inserted into the apparatus simultaneously, and the apparatus preferably also comprises means for performing the intermediate storage of the carrier means with samples thereon and the removal of the carrier means from the apparatus automatically.

The operation of the sample processing apparatus will generally be controlled by means of control means, typically a computer having a central processing unit and one or more memory unit associated therewith, means for controlling the various operations of the apparatus by controlling step motors, solenoids, valves and/or other drive or control parts of the apparatus. The control means may have one or more data communication ports for enabling data communication with external computers by wire or wireless. The control means does not have to be physically arranged within the apparatus itself but may be a computer external to the sample processing apparatus and connected to the apparatus via a data transmission port thereof.

It is advantageous that the probe drive means is arranged to apply the reagent mixture from the mixing cup to selected carrier means. The mixed reagents from the mixing cup may be applied to the samples by separate means, such as a separate probe and probe drive means. In an alternative embodiment the carrier with the sample in question may be moved to a location at an outlet from the mixing cup. However it is presently preferred to use the probe drive means for the task.

The mixing cup may receive the two or more reagents to be mixed from a separate set of vials or other reagent sources, but it is for rationalisation of the apparatus preferable that at least some of the reagents to be mixed may come from the same vials as are used for containing reagents to be applied to the samples. In a preferred embodiment, the probe drive means is therefore arranged to aspirate portions of reagents from at least two selected reagent vials of the vial station and apply said portions of reagents to the mixing cup.

The mixing means of the reagent mixer is constituted by cup drive means arranged for cyclic movement of the mixing cup, e.g. shaking or rotation in a horizontal or a vertical plane, so as to mix reagents contained in the mixing cup. The mixing of the reagent may be further improved by arranging mixing elements, such as blades or edges within the cup and stationary with respect to the cup. Other known mixer types may instead be preferred, such as shaft-driven impellers or magnetically driven impellers.

The cyclic movement is preferably a rotation of the mixing cup, advantageously about a substantially vertical axis. The rotation is in a preferred embodiment an intermittent rotation in a clockwise and in an anticlockwise direction. Preferably the rotation speed may be varied through control means acting upon a driving motor in such manner that the fluid content inside the mixing cup is agitated, but at so low speed that substantially all reagents remain in the mixer cup. Preferably the speed may be controlled depending on the type of reagent in the mixer cup. Preferably the speed is controlled according to the processing protocol controlling the processing of the sample(s) to be processed in the apparatus. Preferably the rotation pattern (speed and direction) is controlled by controlling means, such as a computer, according to the sample processing protocol, thereby optimising the quality the mixing in the mixer cup in respect to the reagents present in the mixer cup. For the sake of good order, by sample processing protocol is meant a sequence of processing steps defined for the actual sample treated in the sample processing apparatus.

In order to provide an efficient and fully automated cleansing of the mixing cup when changing from one reagent mixture to the next, it is advantageous that the mixing cup has inner walls extending upwardly and outwardly from a bottom part of the mixing cup, and the cup drive means is capable of rotating the mixing cup at an angular speed sufficient to fling all reagents contained therein out of the mixing cup. Preferably the inner walls are smooth and may terminate in an upper rim at the widest inner diameter of the mixing cup, in which case the high-speed rotation, preferably about a symmetry axis of the cup, will cause the waste reagent or cleansing liquid to be flung out over this upper rim. In an alternative embodiment of the mixer, the inner walls of the cup extend upwards and inwardly above the level of the widest inner diameter, at which one or more exit openings are provided in the inner wall as outlets for the waste reagent or the cleansing liquid. The top may be open for the probe to enter the mixing cup, or it may be closed to facilitate that the cyclic movement of the mixing cup for mixing the reagents may have a vertical component. The probe may in this case enter the mixing cup through one of the exit openings.

To collect the waste reagent or the cleansing liquid, it is preferred that the reagent mixer comprises a waste reagent collecting chamber having a sidewall part laterally surrounding the mixing cup and arranged to collect reagents flung out of the mixing cup by rotation of the cup.

In a further preferred embodiment, the reagent mixer further comprises a mixing cup holder for receiving and supporting the mixing cup in a releasable manner, so that different mixing cups may be used for different reagent mixtures.

In yet further preferred embodiment, replacing means are provided for replacing the probe that is moved by the probe drive means with another probe, so as to avoid contamination of the reagents in the various reagent vials by the use of more than one probe. This may be combined with a probe washing station, in which one probe is washed after it has been replaced at the probe drive means so that it is clean and ready for repeated use without risking contamination of the content of the reagent vials.

The present invention also relates to a method of fully automated treating of samples arranged on carrier means by means of a sample processing apparatus controlled by means of a control means, wherein the method comprises the steps of:
arranging a plurality of carrier means intermediately in a carrier means station, each carrier means having a sample arranged thereon,
dispensing a portion of a first reagent selected from a plurality of reagents to a mixing cup,
dispensing a portion of a second reagent selected from a plurality of reagents to the mixing cup,
mixing the reagents in the mixing cup by means of mixing means,
moving a probe to the mixing cup by means of a probe drive means,
aspirating a portion of the mixed reagents from the mixing cup by means of the probe,
moving the probe to a selected one of said carrier means, and
dispensing the mixed reagents to the selected carrier means,
so as to perform a treatment of the sample arranged on the selected carrier means wherein each step is carried out according to the sample processing protocol for the sample on the selected carrier means.

In a preferred embodiment, the steps of dispensing portions of the first and the second reagents comprises the steps of
moving a probe to a first, selected reagent vial by means of the probe drive means,
aspirating a portion of the first reagent from the first reagent vial by means of the probe,
moving the probe to the mixing cup by means of the probe drive means, dispensing the portion of the first reagent to the mixing cup,
moving a probe to a second, selected reagent vial by means of the probe drive means,
aspirating a portion of the second reagent from the second reagent vial by means of the probe,
moving the probe to the mixing cup by means of the probe drive means, and dispensing the portion of the second reagent to the mixing cup.

In a further preferred embodiment of the present invention, the method further comprises the step of replacing the probe arranged with the probe drive means with another probe between handling two different reagents or between handling a reagent and a reagent mixture.

The present invention further relates to the use of an apparatus of the present invention as described above for exercising the method of the present invention. More specifically the invention relates to the use of the apparatus for IHC and ISH and sample processing of the type using special stains as well as batch-mode sample processing.

### Brief description of the figures

The invention will now be explained in further detail with reference to the enclosed drawing, wherein
Figure 1 is a perspective view of a sample processing apparatus according to the invention,
Figure 2 is a plan view of a sample processing apparatus according to the invention,

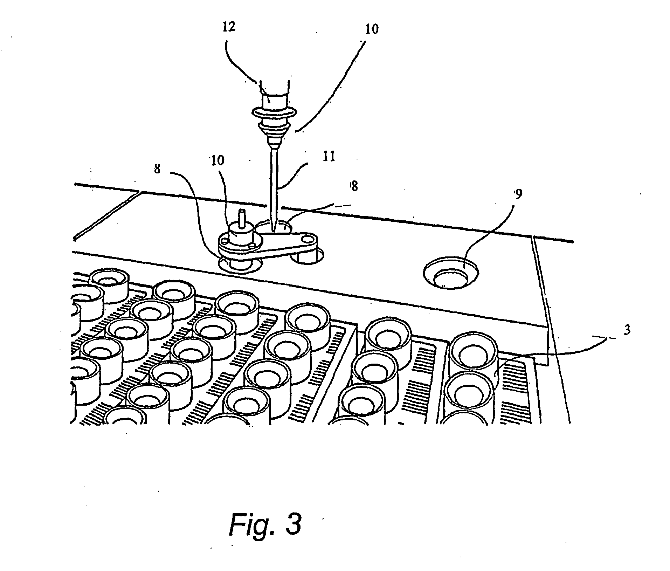

Figure 3 is a perspective view of a detail of the sample processing apparatus according to figure 2,
Figure 4 is a perspective view of a reagent mixer according to the invention, and
Figure 5 is a vertical cross-section of the reagent mixer according to figure 4.

The embodiment shown in the figures and described in details below is only an example of an apparatus in accordance with the present invention and is not limiting the wider scope of the invention as described in the enclosed claims.

### Detailed description of preferred embodiments of the invention

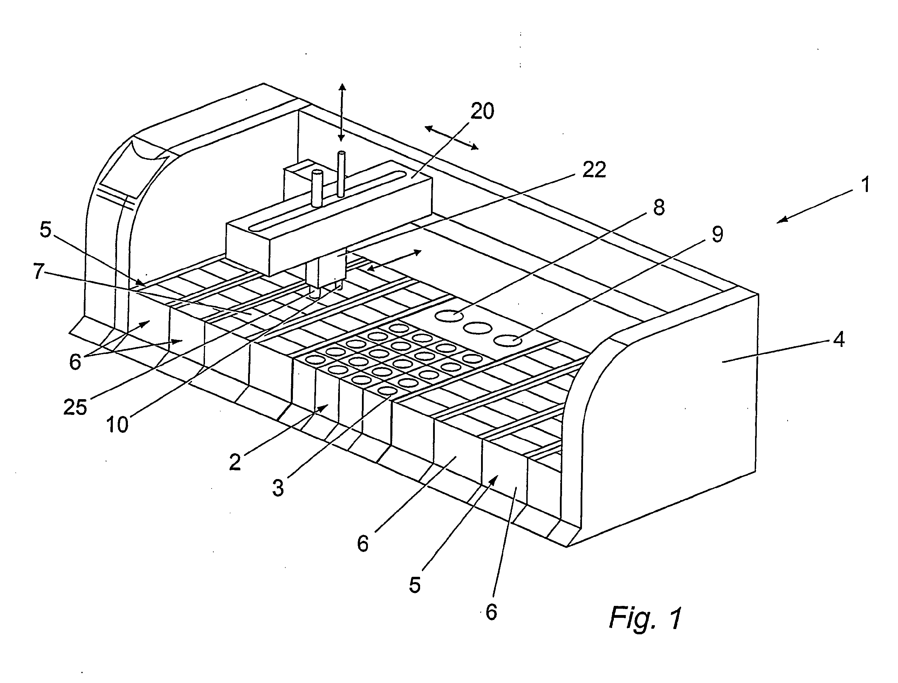

Figure 1 shows one schematic embodiment of a sample processing system 1 in accordance with the present invention. Cabinet sections 4 form outer portions of the system and serve to address general structural considerations of the system (a top cabinet section is not shown in Figure 1). The sample processing system may comprise a plurality of drawers 6 used for the handling and processing of samples and sample carriers such as slides, potentially microscope slides. Other sample carriers may be accommodated consistent with the present invention. Each drawer may be configured to accommodate sample carrier retainment assemblies, such as slide retainment assemblies, carrier racks, modules, or magazines.

One embodiment of a sample carrier retainment assembly may comprise a slide retainment assembly. The slide retainment assembly may comprise a slide rack, module, or magazines. Slide retainment assembly is configured to accommodate a plurality of slides in at least one configuration in corresponding sample carrier retention devices. The sample carrier retainment assemblies, are utilized in the processing of samples as further described below. It should be further noted that the sample carrier retainment assembly can be removably configured with the drawers, and may be stackable or nested within other retainment assemblies.

One or more drawers may be provided to accommodate processing materials such as reagent containers 3 for sample processing, also further described below. A processing material retainment assembly, such as a container rack may be utilized to accommodate reagent containers or other processing materials within each of drawers 110. Bottle inserts may be preferably configured with the retainment assembly to ensure proper processing material positioning within the processing material retainment assembly and the drawer.

Multiple drawers 6 allow for one or a plurality of sample processing protocols to be performed by the system 1. Past efforts at sample processing, as previously described, may have been limited to processing sequences for an entire batch of carriers within the system. The present invention, however, in part by providing a plurality of drawers and carrier retainment assemblies, may allow for multiple batch processing, including real-time or adaptive capabilities for multiple batch processing, as further described below.
The system may access, use and wash multiple probes or syringes for pipetting or otherwise aspirating fluids required for the staining of samples mounted or otherwise presented on slides. To eliminate cross contamination a system with a single reusable probe may wash the probe between each fluid applied. The task of washing the probe can have a large impact on the throughput of the overall system. The present invention may allow for multiple probes to be available to the system for use. The system may continuously have a clean, uncontaminated, sterilized, or an unused probe available to use and sample processing is not impacted by the required cleaning routine. The cleaning routine may be necessary to eliminate the possible cross contamination of fluids and, in some embodiments, may take up to about 1 minute to accomplish. The cumulative impact of the cleaning routine on a series of processing steps can add time to the throughput capabilities of the system. The addition of multiple probes or syringes may eliminate this impact and significantly decreases the time required to process the samples.

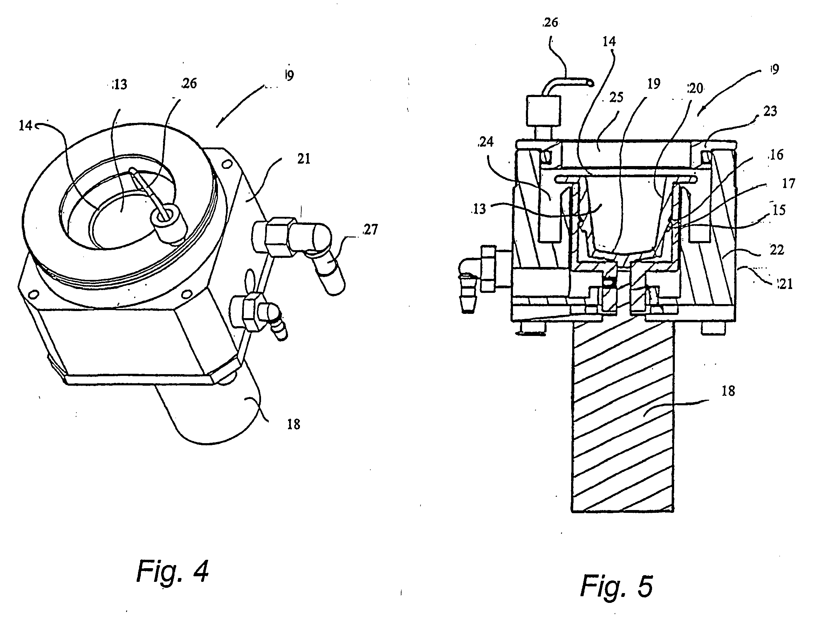

Embodiments of the present invention comprise a mixing station 9 (best shown in Figures 4 and 5). The system may mix component fluids, such as dyes, buffers, or other processing materials, preferably on demand and as the processing steps and protocols dictate. Fluids required during the processing steps may sometimes need to be mixed with other fluids to create a final activated fluid. However, the activity levels of these mixtures can be time sensitive and may therefore only be effective for a short period of time. The on demand mixing of fluids is advantageous in that it allows the fluids to be mixed immediately before being used. The syringe or probe 10, in preferred embodiments, will aspirate fluids into and from the mixing station 9 to mix component fluids. A rinse may further be dispensed into the mixing station to sterilize the station.

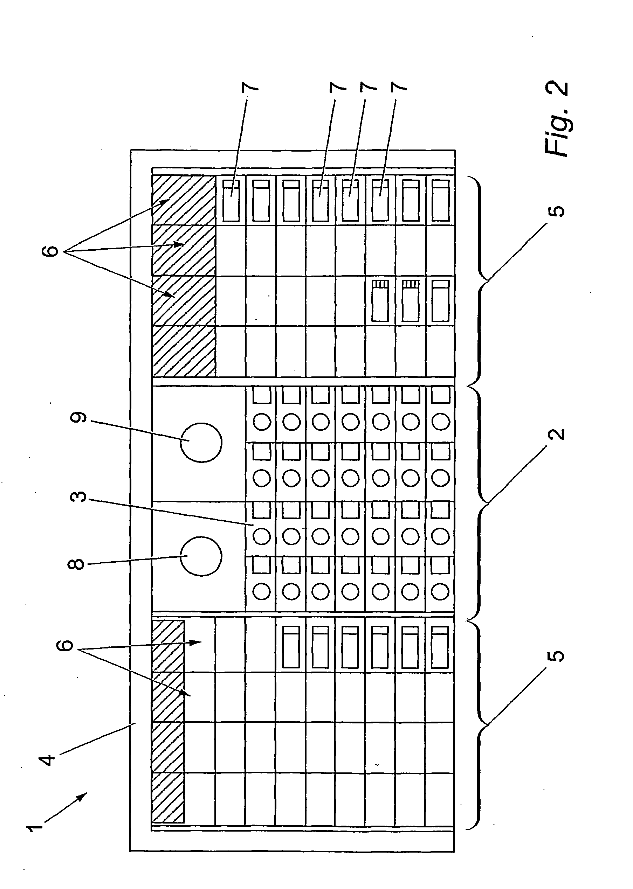

As an example a presently preferred embodiment of a sample processing apparatus, also called a staining apparatus 1, according to the invention is shown in figures 1 and 2. The sample processing apparatus 1 comprises a rectangular frame 4 surrounding a first station 2 comprising an array of compartments wherein each compartment a reagent vial 3 is placed, and a second station 5 wherein a number of separate racks 6 is placed, and where each rack comprises a number of microscope slides 7 mounted side by side in the rack 6. In the embodiment shown, each rack may hold up to 8 slides, but the rack may be designed to hold any suitable number of slides. With eight racks arranged side by side, the shown embodiments may hold up to 64 slides 7 each having a sample, e.g. a tissue mounted on the upper side of the slide, so that reagent may be applied from above to the sample on each slide.

A robot arm 20 in Figure 1 for moving a probe 10 in X and Y (as well as Z) direction as indicated by the arrows X and Y is arranged above the frame 4 of the sample processing apparatus. The robot arm may is therefore position the probe 10 above all reagent vials 3 as well as above all the microscope slides 7, and may further operate the probe 10 to aspirate portions of reagent contained in any of the vials 3, to transfer the portion of reagent and apply it to any of the slides 7 in order to provide a selected staining or treatment of the sample on each slide 7. By use of suitable control means e.g. a computer (not shown) having the appropriate software and input data for the purpose, this staining apparatus 1 is able to automatically staining or treating samples requiring different staining or treatment reagents and processes.

The same staining apparatus viewed from below the robot arm is shown in figure 2, disclosing the probe 10 being manipulated by the robot arm. The probe 10 is raised to an upper position (in a Z direction where it is clear of the vials 3 underneath the probe 10, but the robot comprises means (not shown) for lowering the probe 10 in order to dip the probe tip 11 into the content of a selected reagent vial 3 and to aspirate a selected amount of reagent for the selected staining or treatment process.

The staining apparatus 1 of the present embodiment further comprises at least one probe washing station 8 and a reagent mixer 9, and the robot arm is furthermore arranged to transfer the probe to the washing station 8 as well as to the reagent mixer 9. The reagent mixer 9 will be described in detail below with reference to figures 4 and 5.

The apparatus comprises a reagent mixer 9 having a mixing cup 13 wherein two or more selected reagents may be placed by means of the robot arm and the probe 10. The reagent mixer 9 thereby provides on-board mixing of any reagents contained in the reagent vials 3, and thereby more staining processes, e.g. staining requiring the use of mixing of insoluble reagents, or reagents which may only be effective a short time after mixing, are facilitated to be performed automatically within the staining apparatus without the requirement of human interaction.

The mixer 9 comprises a mixing cup 13 for receiving reagents released from the probe 10. The mixing cup 13 is placed into a holder 15 by means of a complementary snap fitting means 16 and 17 arranged on the inside of the holder 15 and the outside of the mixing cup 13, respectively. A motor 18 is arranged for rotating the holder 15 and thereby the mixing cup 13, either intermittently clockwise and anticlockwise in order to provide a mixing of reagents contained in the mixing cup, or by spinning the holder 15 and thereby the mixing cup 13 in order to fling out waste reagents or cleansing liquid from the mixing cup 13.

For the latter purpose, the mixing cup 13 is preferable provide with sidewalls 20 extending upwardly and outwardly from the bottom 19, e.g. forming a frusto-conical cavity, and the mixing cup 13 has an upper rim 14 allowing the reagents to escape from the mixing cup 13 during the spinning process.

The reagent mixer 9 furthermore comprises a housing 21 having sidewalls 22 surrounding at least the rim 14 of the mixing cup 13 and thereby forming splash faces for collecting any liquid flung out from the mixing cup 13. The housing also comprises a lid 23 for enclosing a space 24 surrounding the mixing cup 13 in order to avoid reagent spills outside the space 24. The lid 23 has a central opening 25 allowing reagents from the probe 10 to be dispensed into the mixing cup 13 from above the reagent mixer 9 as well as allowing the probe 10 to enter the mixing cup 13 for collecting the mixed reagents.

According to a preferred embodiment the housing also comprises a hose connection 27 for draining waste reagent or cleansing liquid from the space 24, and a tap 26 is arranged for dispensing cleansing liquid into the mixing cup 13 when required.

In an alternative embodiment a releasable connection 12 is provided between the probe 10 and the robot arm, enabling the replacement of the probe 10 held by the robot arm by placing the probe 10 in one of a number of free washing stations 8, where it is released by the releasable connection 12, and where a new probe 10' is connected to the robot arm by means of the releasable connection 12.

Having the appropriate input data, the control means of the apparatus operates the robot arm to commence a staining or treatment run by firstly moving the probe to a first reagent vial 3, into which the probe tip 11 is inserted into the liquid and is aspirated into the probe 10 in an amount corresponding to the number of samples to be stained or treated, in accordance with the input data provided to the control means.

The probe 10 is subsequently, in a first operating mode moved by the robot arm towards the slide rack system 5 in which the slides 7 are mounted. The slides 7 are situated with the surface horizontally oriented and the probe 10 releases the required amount of reagent on the appropriate slides in accordance with the input data. Alternatively, the probe 10 is in a second operating mode moved by the robot arm towards the reagent mixer 9 where it releases the reagent into the cup 13 of the reagent mixer 9, and is subsequently moved to the probe washing station 8, where the probe 10 is either washed or - in the alternative embodiment - released into a free washing station 8, and another probe 10' situated in another washing station 8' is connected to the robot arm. The robot arm moves the new clean probe 10' to a second selected reagent vial 3 for collecting a selected amount of reagent from the second vial 3, and the probe 10' is thereafter by means of the robot arm moved to the reagent mixer 9, where the reagent in the probe 10' is dispensed into the cup 13 of the mixer containing the first selected reagent. The second operating mode can according to the invention be commenced several times if more than two reagents are to be mixed for a specific staining or treatment process.

The reagent mixer 9 mixes the reagents in the cup 13 thereof, and a clean probe 10 picked up from the washing station 8 by the robot arm is lowered into the cup 13 of the reagent mixer 9 to collect the mixed reagents, where after the robot arm moves the probe 10 towards the second station 5 containing the slides 7, at which the probe 10 releases the required amount of mixed reagent on selected slides 7 in accordance with the input data.

The robot arm with probe 10 is subsequently directed to a free washing station 8, and the probe 10 is either washed or alternatively replaced by a clean probe 10', where after the process in accordance with the first or the second operating mode may be repeated or continued with a new reagent or reagent mixture.

The present invention is highly suitable for on-board mixing in an automated cytological/IHC/ISH instrument.

It should be understood that by having an inner cup with smooth surface and no sharp edged, cleaning and washing is made easy. Other mixing devices using propellers or baffles or similar, all have large surface areas, edges and concavities, whereto reagents may adhere, whereby thorough washing becomes difficult, possibly resulting in unwanted carry-over.

By design, the shape of the cup allows debris, fines, precipitates or other solids of both high and low density to be centrifuged up and out of the cup at high rotation speeds. Advantageously the speed may be controlled by control means operating according to the processing protocol carried out for the samples present in the apparatus, i.e. if the reagents present in the mixer cup have high viscosity it may be advantageous applying a very high speed of rotation to ensure that all reagents are removed from the cup.

Also, the shape of the cup allow for the specific separation of immiscible liquid phases, by first removing the liquid with the highest density during centrifugation. It should be understood that the shape of the cup makes the mixing almost independent of the volume. The mixing action is the same for a wide range of volumes in the same cup. In contrast, the mixing action of e.g. a propeller mixer is depending on e.g. the volume of reagents, propeller size and container size.

The rotating action of the cup allows air to escape from the mixture and prevent foaming. The rotating action can suppress the formation and build-up of foam by forcing the air/liquid foam down to the liquid surface.

Preferably the rotation pattern (speed and direction) is controlled by controlling means, such as a computer, according to the sample processing protocol, thereby optimising the quality the mixing in the mixer cup in respect to the reagents present in the mixer cup, e.g. in such manner that the formation and build up of foam is suppressed.

The rotating action of the cup does not allow much air from the atmosphere to be sucked down in the reagent mixture. This will limit the pollution and e.g. oxidation of air sensitive reagents. Other methods of mixing, like the action of propellers, can draw air down into the liquid during mixture.

It should be understood that by changing the direction of the rotation, the mixing action could be changed from being very gentle to being very vigorous. Both changing the speed and direction of the rotation and a combination of rotations with variable speed, various speeds, stops and change of direction can control the flow pattern in the cup.

Also, the cup can be covered with a neutral gas like the noble gasses, nitrogen, an carbon dioxide or similar to further protect the reagents during mixing. Preferable, the protective gas is heavier than atmospheric gas. The layer of protective gas can easily be added and removed, and can cover any of the volumes the cup can hold.

By using an on board mixing device, the reagents mixing may be done in a batch-mode to make mixtures for treating multiple samples.

Also, the on board mixing allow for large dilution ratios and the possibility to dilute or mix reagents, using only a small portion of the mixture for treatment of samples, and discarding the rest of the mixture. This is advantageous, as some dilutions ratios are very large, and too small volumes of the concentrated reagent cannot easily be accurately measured and added. Often a minimum volume of reagent to be measured is defined. The on board cup mixing design allow for a very high degree of flexibility in the staining protocol.

## Claims

1. An automated sample processing apparatus (1) for treating samples arranged on carrier means (7), comprising
a vial station (2) for containing at least two reagent vials (3),
a carrier means station (5) arranged for intermediate storage of a plurality of carrier means (7),
probe drive means arranged for moving a probe (10),
wherein the probe drive means is arranged to aspirate a portion of reagent from a selected reagent vial (3) of the vial station (2) by means of a probe (10) and to apply reagent to a selected carrier means (7) of the carrier means station (5),
**characterised in that**
the apparatus (1) comprises an integrated reagent mixer (9) having
a mixing cup (13) for receiving two or more reagents and mixing means for mixing the reagents in the mixing cup (13), and
means (10) for dispensing the reagent mixture from the mixing cup (13) to a selected carrier means (7) of the carrier means station (5) and
wherein the reagent mixer (9) further comprises cup drive means (18) arranged for cyclic movement of the mixing cup (13) so as to mix reagents contained in the mixing cup (13), and
wherein the movement of the mixing cup (13) is a combination of rotations with variable speed, various speeds, stops and change of direction, wherein the rotation pattern (speed and direction) is controlled by controlling means, such as a computer, according to the sample processing protocol for the sample(s) processed in the apparatus..

2. A sample processing apparatus according to claim 1, wherein the probe drive means is arranged to apply the reagent mixture from the mixing cup (13) to selected carrier means (7) of the carrier means station (5).

3. A sample processing apparatus according to claim 1 or 2, wherein the probe drive means is arranged to aspirate portions of reagents from at least two selected reagent vials (3) of the vial station (2) and dispense said portions of reagents into the mixing cup (13).

4. A sample processing apparatus according to claim 1, wherein the cyclic movement is a rotation of the mixing cup (13) and/or wherein the rotation is an intermittent rotation in a clockwise and in an anticlockwise direction.

5. A sample processing apparatus according to claim 4, wherein the rotation take place about a substantially vertical axis.

6. A sample processing apparatus according to any of the preceding claims, wherein the mixing cup (13) has inner walls (20) extending upwardly and outwardly from a bottom part (19) of the mixing cup (13), and the cup drive means (18) is capable of rotating the mixing cup (13) at an angular speed sufficient to fling reagents contained therein out of the mixing cup (13).

7. A sample processing apparatus according to claim 6, wherein the reagent mixer (9) comprises a waste reagent collecting chamber (21) having a sidewall part (22) laterally surrounding the mixing cup (13), and wherein waste reagent collecting chamber (21) is arranged to collect reagents flung out of the mixing cup (13) by rotation of the cup.

8. A sample processing apparatus according to any of the preceding claims, wherein the reagent mixer (9) further comprises a mixing cup holder (15) for receiving and supporting the mixing cup (13) in a releasable manner.

9. A method of fully automated treating of samples arranged on carrier means (7) by means of a sample processing apparatus (1) controlled by means of a control means, wherein the method is **characterised in that** it comprises the steps of
arranging a plurality of carrier means (7) intermediately in a carrier means station (5), each carrier means (7) having a sample arranged thereon,
dispensing a portion of a first reagent selected from a plurality of reagents to a mixing cup (13),
dispensing a portion of a second reagent selected from a plurality of reagents to the mixing cup (13),
mixing the reagents in the mixing cup (13) by means of mixing means,
moving the probe (10) to the mixing cup (13) by means of a probe drive means,
aspirating a portion of the mixed reagents from the mixing cup (13) by means of the probe (10),
moving the probe (10) to a selected one of said carrier means (7), and
dispensing the mixed reagents to the selected carrier means (7),
so as to perform a treatment of the sample arranged on the selected carrier means (7) wherein each step is carried out according to the sample processing protocol for the sample on the selected carrier means.

10. A method according to claim 9, wherein the steps of dispense portions of the first and the second reagents comprises the steps of
moving a probe (10) to a first, selected reagent vial (3) by means of the probe drive means,
aspirating a portion of the first reagent from the first reagent vial (3) by means of the probe (10),
moving the probe (10) to the mixing cup (13) by means of the probe drive means,
dispensing the portion of the first reagent to the mixing cup (13),
moving a probe (10') to a second, selected reagent vial (3) by means of the probe drive means,
aspirating a portion of the second reagent from the second reagent vial (3) by means of the probe (10'),
moving the probe (10') to the mixing cup (13) by means of the probe drive means, and
dispensing the portion of the second reagent to the mixing cup (13).

11. A method according to claim 9 or 10, further comprising the step of controlling the rotation pattern (speed and direction) according to the sample processing protocol thereby optimising the quality the mixing in the mixer cup in respect to the reagents present in the mixer cup.

12. A method according to claim 9 or 10, further comprising the step of adding a protective gas covering the reagent mixture in the mixer cup.

13. A method according to claim 12, wherein the protective gas is included in the group comprising noble gasses, nitrogen, and carbon dioxide.

14. Use of an apparatus according to one of claims 1 to 8 for exercising the method according to one of claims 11 to 13 for immunohistochemistry and in-situ hybridization

15. Use of an apparatus according to one of claims 1 to 8 for exercising the method according to one of claims 9 to 13 for batch-mode sample processing

## Patentansprüche

1. Automatische Probenverarbeitungsvorrichtung (1) zum Behandeln von Proben, die auf Trägereinrichtungen (7) angeordnet sind, wobei die Vorrichtung umfasst:
eine Röhrchen-Station (2) zum Aufnehmen von wenigstens zwei Reagenzröhrchen (3),
eine Trägereinrichtungs-Station (5), die zur Zwischenaufbewahrung einer Vielzahl von Trägereinrichtungen (7) eingerichtet ist,
eine Sonden-Bewegungseinrichtung, die zum Bewegen einer Sonde (10) eingerichtet ist,
wobei die Sonden-Bewegungseinrichtung so eingerichtet ist, dass sie einen Teil eines Reagenz aus einem ausgewählten Reagenzröhrchen (3) der Röhrchen-Station (2) mittels einer Sonde (10) absaugt und Reagenz auf eine ausgewählte Trägereinrichtung (7) der Trägereinrichtungs-Station (5) aufträgt,
**dadurch gekennzeichnet, dass**
die Vorrichtung einen integrierten Reagenz-Mischer (9) umfasst, der aufweist:
eine Mischschale (13) zum Aufnehmen von zwei oder mehr Reagenzien sowie eine Mischeinrichtung zum Mischen der Reagenzien in der Mischschale (13), und
eine Einrichtung (10) zum Ausgeben des Reagenz-Gemischs aus der Mischschale (13) an eine ausgewählte Trägereinrichtung (7) der Trägereinrichtungs-Station (5), und
wobei der Reagenz-Mischer (9) des Weiteren eine Schalen-Bewegungseinrichtung (18) umfasst, die für zyklische Bewegung der Mischschale (13) eingerichtet ist, um in der Mischschale (13) enthaltene Reagenzien zu mischen, und
wobei die Bewegung der Mischschale (13) eine Kombination aus Drehungen mit variabler Geschwindigkeit, verschiedenen Geschwindigkeiten, Unterbrechungen und Richtungsänderung ist und das Muster (Geschwindigkeit und Richtung) der Drehung durch eine Bewegungseinrichtung, wie beispielsweise einen Computer, entsprechend dem Probenverarbeitungs-Protokoll für die Probe/n gesteuert wird, die in der Vorrichtung verarbeitet wird/werden.

2. Probenverarbeitungsvorrichtung nach Anspruch 1, wobei die Sonden-Bewegungseinrichtung so eingerichtet ist, dass sie das Reagenz-Gemisch aus der Mischschale (13) auf ausgewählte Trägereinrichtungen (7) der Trägereinrichtungs-Station (5) aufträgt.

3. Probenverarbeitungsvorrichtung nach Anspruch 1 oder 2, wobei die Sonden-Bewegungseinrichtung so eingerichtet ist, dass sie Teile von Reagenzien aus wenigstens zwei ausgewählten Reagenzröhrchen (3) der Röhrchen-Station (2) absaugt und die Teile der Reagenzien in die Mischschale (13) ausgibt.

4. Probenverarbeitungsvorrichtung nach Anspruch 1, wobei die zyklische Bewegung eine Drehung der Mischschale (13) ist und/oder die Drehung eine intermittierende Drehung im Uhrzeigersinn und entgegen dem Uhrzeigersinn ist.

5. Probenverarbeitungsvorrichtung, nach Anspruch 4, wobei die Drehung um eine im Wesentlichen vertikale Achse herum stattfindet.

6. Probenverarbeitungsvorrichtung nach einem der vorangehenden Ansprüche, wobei die Mischschale (13) Innenwände (20) hat, die sich von einem unteren Teil (19) der Mischschale (13) nach oben und nach außen erstrecken, und die Schalen-Bewegungseinrichtung (18) in der Lage ist, die Mischschale (13) mit einer Winkelgeschwindigkeit zu drehen, die ausreicht, um darin enthaltene Reagenzien aus der Mischschale (13) herauszuschleudern.

7. Probenverarbeitungsvorrichtung nach Anspruch 6, wobei der Reagenz-Mischer (9) eine Kammer (21) zum Auffangen verbrauchter Reagenzien umfasst, die einen Seitenwandteil (22) hat, der die Mischschale (13) seitlich umschließt, und die Kammer (21) zum Auffangen verbrauchter Reagenzien so eingerichtet ist, dass sie durch Drehung der Schale aus der Mischschale (13) herausgeschleuderte Reagenzien auffängt.

8. Probenverarbeitungsvorrichtung nach einem der vorangehenden Ansprüche, wobei der Reagenz-Mischer (9) des Weiteren einen Mischschalen-Halter (13) zum entnehmbaren Aufnehmen und Tragen der Mischschale (13) umfasst.

9. Verfahren zum vollautomatischen Behandeln von Proben, die auf Trägereinrichtungen (7) angeordnet sind, mittels einer Probenbehandlungsvorrichtung (1), die durch eine Steuereinrichtung gesteuert wird, wobei das Verfahren **dadurch gekennzeichnet ist, dass** es die folgenden Schritte umfasst:
Anordnen einer Vielzahl von Trägereinrichtungen (7) unmittelbar in einer Trägereinrichtungs-Station (5), wobei auf jeder der Trägereinrichtungen (7) eine Probe angeordnet ist,
Ausgeben eines Teils eines aus einer Vielzahl von Reagenzien ausgewählten ersten Reagenz an eine Mischschale (13),
Ausgeben eines Teils eines aus einer Vielzahl von Reagenzien ausgewählten zweiten Reagenz an die Mischschale (13),
Mischen der Reagenzien in der Mischschale (13) mit Mischeinrichtungen,
Bewegen der Sonde (10) zu der Mischschale (13) mittels einer Sonden-Bewegungseinrichtung,
Absaugen eines Teils der gemischten Reagenzien aus der Mischschale (13) mittels der Sonde (10),
Bewegen der Sonde (10) an eine ausgewählte der Trägereinrichtungen (7), und
Ausgeben der gemischten Reagenzien an die ausgewählte Trägereinrichtung (7),
um eine Behandlung der auf der ausgewählten Trägereinrichtung (7) angeordneten Probe durchzuführen, wobei jeder Schritt entsprechend dem Probenverarbeitungs-Protokoll für die Probe auf der ausgewählten Trägereinrichtung ausgeführt wird.

10. Verfahren nach Anspruch 9, wobei die Schritte des Ausgebens von Teilen der ersten und der zweiten Reagenzien die folgenden Schritte umfassen:
Bewegen einer Sonde (10) an ein erstes ausgewähltes Reagenzröhrchen (3) mittels der Sonden-Bewegungseinrichtung,
Absaugen eines Teils des ersten Reagenz aus dem ersten Reagenzröhrchen (3) mittels der Sonde (10),
Bewegen der Sonde (10) zu der Mischschale (13) mittels der Sonden-Bewegungseinrichtung,
Ausgeben des Teils des ersten Reagenz in die Mischschale (13),
Bewegen einer Sonde (10') an ein zweites ausgewähltes Reagenzröhrchen (3) mittels der Sonden-Bewegungseinrichtung,
Absaugen eines Teils des zweiten Reagenz aus dem zweiten Reagenzröhrchen (3) mittels der Sonde (10'),
Bewegen der Sonde (10') zu der Mischschale (13) mittels der Sonden-Bewegungseinrichtung, und
Ausgeben des Teils des zweiten Reagenz in die Mischschale (13).

11. Verfahren nach Anspruch 9 oder 10, das des Weiteren den Schritt umfasst, in dem das Muster der Drehung (Geschwindigkeit und Richtung) entsprechend dem Probenverarbeitungs-Protokoll gesteuert wird, um so die Qualität des Mischens in der Mischschale in Bezug auf die in der Mischschale vorhandenen Reagenzien zu optimieren.

12. Verfahren nach Anspruch 9 oder 10, das des Weiteren den Schritt des Zusetzens eines Schutzgases umfasst, dass das Reagenz-Gemisch in der Mischschale abdeckt.

13. Verfahren nach Anspruch 12, wobei das Schutzgas in der Gruppe enthalten ist, die Edelgase, Stickstoff und Kohlendioxid enthält.

14. Einsatz einer Vorrichtung nach einem der Ansprüche 1 bis 8 zum Ausführen des Verfahrens nach einem der Ansprüche 11 bis 13 für Immunhistochemie und in-situ-Hybridisierung.

15. Einsatz einer Vorrichtung nach einem der Ansprüche 1 bis 8 zum Ausführen des Verfahrens nach einem der Ansprüche 9 bis 13 zur Verarbeitung von Proben im Chargenbetrieb.

## Revendications

1. Appareil de traitement automatisé d'échantillons (1) destiné au traitement d'échantillons agencés sur des moyens de support (7), comprenant
une station pour flacons (2) destinée à contenir au moins deux flacons de réactifs (3),
une station pour moyens de support (5) agencée pour un stockage intermédiaire d'une pluralité de moyens de support (7),
un moyen d'entraînement de sonde agencé pour un déplacement de la sonde (10),
dans lequel le moyen d'entraînement de sonde est agencé de façon à aspirer une portion de réactif à partir d'un flacon de réactif sélectionné (3) de la station pour flacons (2) à l'aide d'une sonde (10) et à appliquer un réactif à un moyen de support sélectionné (7) de la station pour moyens de support (5),
**caractérisé en ce que**
l'appareil (1) comprend un mélangeur de réactifs intégré (9) comportant
une cupule de mélange (13) destinée à recevoir deux réactifs ou plus et un moyen de mélange destiné à mélanger les réactifs dans la cupule de mélange (13), et
des moyens (10) destinés à distribuer le mélange de réactifs de la cupule de mélange (13) à un moyen de support sélectionné (7) de la station pour moyens de support (5) et
dans lequel le mélangeur de réactifs (9) comprend en outre un moyen d'entraînement de cupule (18) agencé pour un mouvement cyclique de la cupule de mélange (13) de sorte à mélanger des réactifs contenus dans la cupule de mélange (13), et
dans lequel le mouvement de la cupule de mélange (13) est une combinaison de rotations à vitesse variable, de diverses vitesses, d'arrêts et de changement de sens, dans lequel la configuration de rotation (vitesse et sens) est commandée par un moyen de commande, tel qu'un ordinateur, selon le protocole de traitement d'échantillon pour le ou les échantillons traités dans l'appareil.

2. Appareil de traitement d'échantillons selon la revendication 1, dans lequel le moyen d'entraînement de sonde est agencé pour appliquer le mélange de réactifs provenant de la cupule de mélange (13) au moyen de support sélectionné (7) de la station pour moyens de support (5).

3. Appareil de traitement d'échantillons selon la revendication 1 ou 2, dans lequel le moyen d'entraînement de sonde est agencé pour aspirer des portions de réactifs provenant d'au moins deux flacons de réactifs sélectionnés (3) de la station pour flacons (2) et distribue lesdites portions de réactifs dans la cupule de mélange (13).

4. Appareil de traitement d'échantillons selon la revendication 1, dans lequel le mouvement cyclique est une rotation de la cupule de mélange (13) et/ou dans lequel la rotation est une rotation intermittente dans le sens des aiguilles d'une montre et dans le sens inverse des aiguilles d'une montre.

5. Appareil de traitement d'échantillons selon la revendication 4, dans lequel la rotation s'effectue autour d'un axe globalement vertical.

6. Appareil de traitement d'échantillons selon l'une quelconque des revendications précédentes, dans lequel la cupule de mélange (13) possède des parois internes (20) qui s'étendent vers le haut et vers l'extérieur à partir d'une partie inférieure (19) de la cupule de mélange (13), et le moyen d'entraînement de cupule (18) est en mesure de faire tourner la cupule de mélange (13) à une vitesse angulaire suffisante pour projeter des réactifs contenus dans la cupule de mélange en dehors de celle-ci.

7. Appareil de traitement d'échantillons selon la revendication 6, dans lequel le mélangeur de réactifs (9) comprend une chambre de collecte de réactifs résiduaires (21) possédant une partie de paroi latérale (22) qui encercle latéralement la cupule de mélange (13), et dans lequel la chambre de collecte de réactifs résiduaires (21) est agencée pour collecter des réactifs projetés en dehors de la cupule de mélange (13) par rotation de la cupule.

8. Appareil de traitement d'échantillons selon l'une quelconque des revendications précédentes, dans lequel le mélangeur de réactifs (9) comprend en outre un support de cupule de mélange (15) destiné à recevoir et à supporter la cupule de mélange (13) de manière amovible.

9. Procédé de traitement totalement automatisé d'échantillons agencés sur des moyens de support (7) à l'aide d'un appareil de traitement d'échantillons (1) commandé à l'aide d'un moyen de commande, où le procédé est **caractérisé en ce qu'**il comprend les étapes
d'agencement d'une pluralité de moyens de support (7) de manière intermédiaire dans une station pour moyens de support (5), chaque moyen de support (7) ayant un échantillon agencé sur celui-ci,
de distribution d'une portion d'un premier réactif sélectionné parmi une pluralité de réactifs dans une cupule de mélange (13),
de distribution d'une portion d'un deuxième réactif sélectionné parmi un pluralité de réactifs à la cupule de mélange (13),
de mélange des réactifs dans la cupule de mélange (13) à l'aide de moyen de mélange,
de déplacement de la sonde (10) vers la cupule de mélange (13) à l'aide d'un moyen d'entraînement de sonde,
d'aspiration d'une portion des réactifs mélangés à partir de la cupule de mélange (13) à l'aide de la sonde (10),
de déplacement de la sonde (10) vers un moyen de support sélectionné parmi lesdits moyens de support (7), et
de la distribution des réactifs mélangés à un moyen de support sélectionné (7),
de sorte à effectuer un traitement de l'échantillon agencé sur le moyen de support sélectionné (7) dans lequel chaque étape est exécutée selon le protocole de traitement d'échantillon pour l'échantillon sur le moyen de support sélectionné.

10. Procédé selon la revendication 9, dans lequel les étapes de distribution des portions du premier et du deuxième réactifs comprennent les étapes
de déplacement d'une sonde (10) vers un premier flacon de réactif sélectionné (3) à l'aide du moyen d'entraînement de sonde (10),
d'aspiration d'une portion du premier réactif à partir du premier flacon de réactif (3) à l'aide de la sonde (10),
de déplacement de la sonde (10) vers la cupule de mélange (13) à l'aide du moyen d'entraînement de sonde,
de distribution de la portion du premier réactif à la cupule de mélange (13),
de déplacement d'une sonde (10') vers un deuxième flacon de réactif sélectionné à l'aide du moyen d'entraînement de sonde,
d'aspiration d'une portion du deuxième réactif à partir du deuxième flacon de réactif (3) à l'aide de la sonde (10')
de déplacement de la sonde (10) vers la cupule de mélange (13) à l'aide du moyen d'entraînement de sonde, et
de distribution de la portion du deuxième réactif à la cupule de mélange (13).

11. Procédé selon la revendication 9 ou 10, comprend en outre l'étape de commande de la configuration de rotation (vitesse et sens) selon le protocole de traitement d'échantillon en optimisant ainsi la qualité du mélange dans la cupule mélangeuse en ce qui concerne les réactifs présents dans la cupule mélangeuse.

12. Procédé selon la revendication 9 ou 10, comprenant en outre l'étape d'ajout de gaz protecteur couvrant le mélange de réactifs dans la cupule mélangeuse.

13. Procédé selon la revendication 12, dans lequel le gaz protecteur est inclus dans le groupe comprenant des gaz rares, de l'azote, et du dioxyde de carbone.

14. Utilisation d'un appareil selon l'une des revendications 1 à 8 pour l'exercice du procédé selon l'une des revendications 11 à 13 pour une immunohistochimie et une hybridation in-situ.

15. Utilisation d'un appareil selon l'une des revendications 1 à 8 pour l'exercice du procédé selon l'une des revendications 9 à 13 pour un traitement d'échantillons en mode par lot.
